# EUROPÄISCHE PATENTANMELDUNG

(11) **EP 2 557 470 A2**
(43) Veröffentlichungstag der Anmeldung: **13.02.2013**
(21) Anmeldenummer: 12180065.0
(22) Anmeldetag: 10.08.2012
(51) Int. Cl.: G05D 7/01

(54) **Stromregelventil und Stromverfahren**

(30) Priorität: 12.08.2011 DE 102011080908
(71) Anmelder: Aktiebolaget SKF, 41 550 Göteborg (SE)
(72) Erfinder: Inanloo, Ali-Akbar, 68167 Mannheim (DE); Schürmann, Stefan, 69190 Walldorf (DE); Kreutzkämper, Jürgen, 10405 Berlin (DE)
(74) Vertreter: Schonecke, Mitja

(57) **Zusammenfassung**

Die Erfindung geht aus von einem Stromregelventil mit wenigstens einer Einlasseinheit (9), welche zu einem Einströmen einer Flüssigkeit in das Stromregelventil vorgesehen ist, und mit zumindest einer Auslasseinheit (10), welche zu einem Ausströmen der Flüssigkeit aus dem Stromregelventil vorgesehen ist.

Es wird vorgeschlagen, dass die Einlasseinheit (9) zumindest teilweise an einer radialen Außenoberfläche (14) des Stromregelventils angeordnet ist.

## Beschreibung

Die Erfindung geht aus von einem Stromregelventil nach dem Oberbegriff des Anspruchs 1.

Es ist ein Stromregelventil bekannt, welches eine Einlasseinheit aufweist, welche an einer Stirnseite des Stromregelventils angeordnet ist und zu einem Einströmen einer Flüssigkeit in das Stromregelventil vorgesehen ist. Ferner weist das Stromregelventil eine Auslasseinheit auf, die zu einem Ausströmen der Flüssigkeit aus dem Stromregelventil vorgesehen ist.

Die Aufgabe der Erfindung besteht insbesondere darin, ein gattungsgemäßes Stromregelventil mit einer flexiblen und effizienten Einsetzbarkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einem Stromregelventil mit wenigstens einer Einlasseinheit, welche zu einem Einströmen einer Flüssigkeit in das Stromregelventil vorgesehen ist, und mit zumindest einer Auslasseinheit, welche zu einem Ausströmen der Flüssigkeit aus dem Stromregelventil vorgesehen ist.

Es wird vorgeschlagen, dass die Einlasseinheit zumindest teilweise an einer radialen Außenoberfläche des Stromregelventils angeordnet ist. Unter "vorgesehen" soll insbesondere speziell ausgelegt und/oder speziell ausgestattet verstanden werden. Unter einer "radialen Richtung" soll insbesondere eine Richtung verstanden werden, welche in Bezug auf eine Gerade, welche durch den Schwerpunkt des Stromregelventil verläuft und welche parallel zur Längserstreckungsrichtung des Stromregelventils und/oder parallel zu einer axialen Richtung des Stromregelventils verläuft, in radialer Richtung verläuft. Mit einer erfindungsgemäßen Ausgestaltung kann eine flexible und effiziente Einsetzbarkeit des Stromregelventils erreicht werden. Insbesondere könne flexible und effiziente Flusswege von Flüssigkeit innerhalb des Stromregelventils erreicht werden. Im Besonderen kann das Stromregelventil effizient in Vorrichtungen eingesetzt werden, in welchen Flüssigkeit radial zum Stromregelventil zufließt und axial vom Stromregelventil wegfließt. Insbesondere kann eine kompakte Bauweise erreicht werden.

Mit Vorteil weist die Einlasseinheit wenigstens eine Durchgangsöffnung auf, welche in radialer Richtung von einer Außenseite des Stromregelventils zu einem Innenraumbereich des Stromregelventils verläuft. Dadurch kann eine konstruktiv einfache Ausgestaltung der Einlasseinheit erreicht werden.

Vorzugsweise weist das Stromregelventil wenigstens einen Kanal auf, welcher von der Einlasseinheit zu einem Druckübertragungsbereich eines Regelelement des Stromregelventils verläuft, wobei der Druckübertragungsbereich dazu vorgesehen ist, durch einen Druck einer in das Stromventil eingeströmten und durch den Kanal geflossenen Flüssigkeit wenigstens ein Energiespeicherelement des Stromregelventils zumindest teilweise aufzuladen. Dadurch kann eine einfache Regelung erfolgen. Vorzugsweise ist das Energiespeicherelement eine Druckfeder, wodurch eine kostengünstige Bauweise erreicht werden kann.

Ferner wird vorgeschlagen, dass der Kanal wenigstens teilweise innerhalb einer Wand eines Hülsenelements des Stromregelventils verläuft. Hierdurch kann Bauraum eingespart werden. Vorzugsweise ist das Hülsenelement einstückig ausgebildet. Hierbei soll unter "einstückig" insbesondere aus einem Guss und/oder aus einer Spritzung und/oder nur unter Zerstörung trennbar verstanden werden.

Mit Vorteil weist das Stromregelventil wenigstens ein Einstellelement auf, welches zu einer Veränderung einer Druckdifferenz vorgesehen ist, welche bei einem Betriebsvorgang zwischen der Flüssigkeit an der Einlasseinheit und der Flüssigkeit an der Auslasseinheit herrscht. Dadurch kann eine flexible Betriebsweise erreicht werden.

Vorzugsweise ist die Auslasseinheit weiter von dem Einstellelement entfernt als die Einlasseinheit. Damit kann eine flexible Verwendbarkeit des Stromregelventils erzielt werden. Insbesondere kann das Stromregelventil auch in Gehäuse eingebaut werden, die eine Zuleitung zum einzubauenden Stromregelventil aufweisen, welche nahe an einer Oberfläche des Gehäuses liegen.

Außerdem wird vorgeschlagen, dass das Einstellelement wenigstens zwei Steuerkonturen aufweist, welche in Abhängigkeit von der Anordnung des Einstellelements relativ zu der Einlasseinheit bezüglich einer axialen Richtung des Stromregelventils die Druckdifferenz bestimmen. Auf diese Weise kann durch die Anordnung des Einstellelements ein Ausströmquerschnitt der Auslasseinheit beeinflusst werden.

Vorzugsweise weist das Stromregelventil eine Betätigungseinheit auf, welche manuell entlang der Längserstreckungsrichtung des Stromregelventils verschiebbar ist und welche bei einer derartigen Verschiebung das Einstellelement betätigt. Dadurch kann ein Verhalten des Stromregelventils eingestellt werden.

Ferner wird eine Vorrichtung mit dem Stromregelventil vorgeschlagen, wobei die Vorrichtung einen außerhalb des Stromregelventils verlaufenden Kanal aufweist, welcher in der radialen Richtung zu wenigstens einer Einlassöffnung der Einlasseinheit verläuft. Hierdurch kann ein einfaches Einströmen von Flüssigkeit in das Stromregelventil erreicht werden.

Vorzugsweise weist die Vorrichtung einen außerhalb des Stromregelventils verlaufenden Kanal auf, welcher ausgehend von der Auslasseinheit weg von dem Stromregelventil entlang der Längserstreckungsrichtung des Stromregelventils verläuft. Auf diese Weise kann ein kompakter Aufbau erzielt werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Fig. 1 zeigt einen Teilschnitt eines Teils einer Vorrichtung mit einem erfindungsgemäßen Stromregelventil,
Fig. 2 zeigt eine Draufsicht von oben auf einen Teil eines Einstellelements des Stromregelventils.

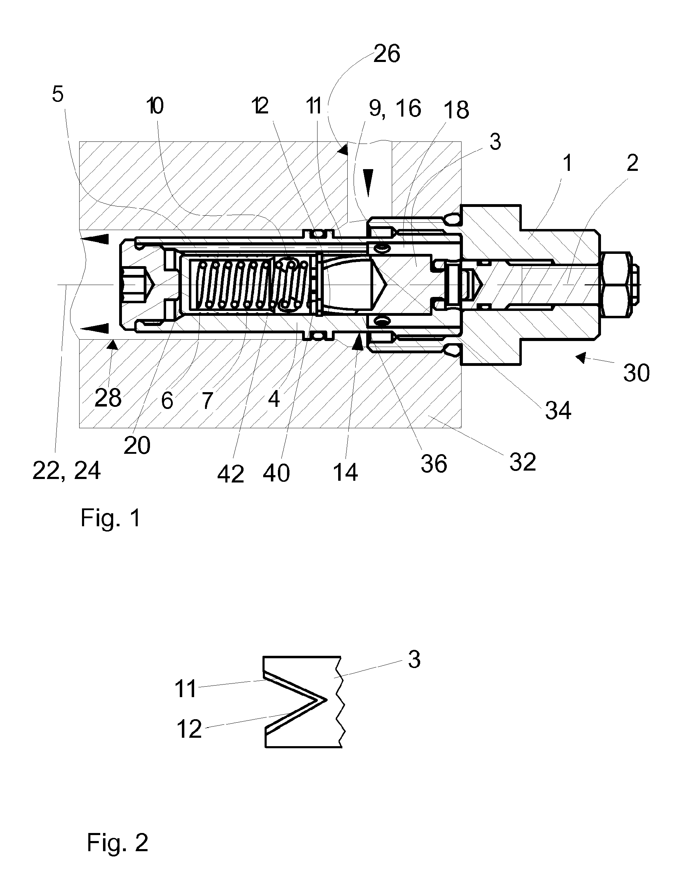

Figur 1 zeigt einen Teilschnitt eines Ausschnitts einer Vorrichtung. Die Vorrichtung ist ein Maschinenblock und weist ein erfindungsgemäßes Stromregelventil 30 auf. Alternativ kann die Vorrichtung auch ein Steuerblock sein. Das Stromregelventil 30 ist in ein Gehäuse 32 eingeschraubt. Das Gehäuse weist einen Kanal 26 und einen Kanal 28 auf. Die Kanäle 26, 28 sind und das Stromregelventil 30 werden bei einem Betriebsvorgang von Hydrauliköl durchflossen. In einer alternativen Ausführung wird statt des Hydrauliköls Schmieröl verwendet. Das Hydrauliköl fließt durch den Kanal 26 zu einer Einlasseinheit 9 des Stromregelventils 30, durch welche es in einen Innenraumbereich 18 des Stromregelventils 30 gelangt. Nachdem das Hydrauliköl das Stromregelventil 30 durchlaufen hat, fließt es durch eine Auslasseinheit 10 aus dem Stromregelventil 30 in den Kanal 28.

Die Einlasseinheit 9 ist an einer radialen Außenoberfläche 14 des Stromregelventils 30 angeordnet. Ein Hülsenelement 4 bildet einen Teil der radialen Außenoberfläche 14 und weist eine Durchgangsöffnung 16 der Einlasseinheit 9 auf, welche in Bezug auf eine Längserstreckungsrichtung 24 des Stromregelventils 30 in radialer Richtung ausgehend von der Außenoberfläche 14 zu einem Innenraumbereich 18 des Stromregelventils 30 verläuft. Der Kanal verläuft in Bezug auf die Längserstreckungsrichtung 24 in einer radiale Richtung auf die Durchgangsöffnung 16 zu. Weitere, zur Durchgangsöffnung 16 baugleiche Durchgangsöffnungen der Einlasseinheit 9 sind über einen Umfang der Außenoberfläche gleichmäßig verteilt angeordnet.

Ein als Drosselkolben ausgebildetes Einstellelement 3 des Stromregelventils 30 dient zu einer Veränderung einer Druckdifferenz, welche bei dem Betriebsvorgang zwischen dem Hydrauliöl an der Einlasseinheit 9 und dem Hydrauliköl an der Auslasseinheit 10 herrscht. Auf ihrem Weg von der Einlasseinheit 9 zu der Auslasseinheit 10 fließt das Hydrauliköl durch einen Spalt, der von Bereichen 34, 36 des Hülsenelements 4 und von Bereichen des als Drosselkolbens ausgebildeten Einstellelements 3, und zwar von Steuerkonturen 11, 12 des Einstellelements 3 gebildet ist. Wird in einer Richtung entlang der Längserstreckungsrichtung des Kanals 26 auf die Steuerkonturen 11, 12 geblickt (Figur 2), so unterscheidet ist die Steuerkontur 11 im Vergleich zu einer Hälfte eines Hohlzylinders durch eine dreiecksförmige Ausnehmung. Die Steuerkontur 12 unterscheidet sich in derselben Ansicht (Figur 2) nur um eine dreiecksförmige Ausnehmung von einer Hälfte eines Hohlzylinders, wobei die letztgenannte Ausnehmung kleiner ist als die erstgenannte Ausnehmung. Der Druck, den das Hydrauliköl nach dem Durchfließen des Spalts aufweist, ist kleiner als der Druck, den das Hydrauliköl in dem Innenraumbereich 18 hat. Nach dem Durchfließen des Spalts fließt das Öl ohne Druckverlust weiter zu der Auslasseinheit 10.

Ein Bauteil 1 des Stromregelventils 30 ist in das Gehäuse 32 eingeschraubt. Ferner ist ein als Spindel ausgebildetes Betätigungselement 2 in das Bauteil 1 eingeschraubt. Durch ein manuelles Drehen des Betätigungselements 2 um die Längserstreckungsrichtung 24, welche eine axiale Richtung des Stromregelventils ist, ist das Betätigungselement 2 entlang der Längserstreckungsrichtung 24 verschiebbar. Durch dieses Verschieben wird das Einstellelement 3 entlang der Längserstreckungsrichtung 24 verschoben, wodurch ein Spaltquerschnitt des Spalts, der durch die Steuerkonturen 11, 12 und durch die Bereiche 34, 36 begrenzt wird, verändert wird. Dadurch wird ein Druckverlust, den das Hydrauliköl beim Fließen durch diesen Spalt erleidet, verändert.

Außerdem weist das Stromregelventil 30 ein als Regelkolben ausgebildetes Regelelement 6 auf, welches in einem Innenbereich des Hülsenelements 4 beweglich entlang der Richtung 22 derart angeordnet ist, dass kein Öl zwischen dem Hülsenelements 4 und dem Regelelement 6 fließen kann. Ein als Druckfeder ausgebildetes Energiespeicherelement 7 des Stromregelventils 30 liegt an einer gelochten Scheibe 40, welche an dem Hülsenelement 4 befestigt ist, an und drückt gegen einen Druckübertragungsbereich 20 des Regelelements 6. Die Auslasseinheit weist Durchgangsöffnungen auf, die von einem Innenbereich des Hülsenelements 4 in den Kanal 28 führen. Ein Kanal 5 leitet Öl von dem Innenraumbereich ohne Druckverlust zu dem Drückübertragungsbereich 20, so dass das betreffende Öl gegen den Drückübertragungsbereich 20 drückt und die Druckfeder komprimiert. Der Kanal 5 verläuft innerhalb einer Wand des Hülsenelements 4 entlang der Richtung 22. Ein Hohlzylinderförmiger Endbereich 42 des Regelelements 6 verschließt bei entsprechender Verschiebung entlang der Richtung 24 die Auslasseinheit 10 wenigstens teilweise und begrenzt dadurch den Volumenstrom an Öl, der durch die Auslasseinheit ausströmen kann. Der Kanal 28 führt das Öl ausgehend von der Auslasseinheit entlang der Längserstreckungsrichtung 24 weg von dem Stromregelventil 30.

An dem Regelelement 6 greift eine Kraft an, die Öl verursacht wird, das durch den kanal 5 geflossen ist. Ferner greift an dem Regelelement 6 die Kraft der Druckfeder und die Kraft des Öls an, welches durch den Spalt geflossen ist und im Bereich der Druckfeder und der Auslasseinheit 10 angeordnet ist. Ein Gleichgewicht zwischen den genannten Kräften bestimmt die Position des Regelelements 6. Auf diese Position kann durch ein Betätigen der Betätigungseinheit 2 Einfluss genommen werden. Durch die unterschiedlichen Steuerkonturen 11, 12 ist entlang der Richtung 22 ein unterschiedliches Verstellverhalten in Bezug auf eine Druckdifferenzveränderung bei einer Betätigung der Betätigungseinheit 2 gegeben.

Ein neben der Scheibe angeordneter, gelochter Sicherungsring sichert die Scheibe.

### Bezugszeichenliste

| | |
|---|---|
| 1 | Bauteil |
| 2 | Betätigungseinheit |
| 3 | Einstellelement |
| 4 | Hülsenelement |
| 5 | Kanal |
| 6 | Regelelement |
| 7 | Energiespeicherelement |
| 9 | Einlasseinheit |
| 10 | Auslasseinheit |
| 11 | Steuerkontur |
| 12 | Steuerkontur |
| 14 | Außenoberfläche |
| 16 | Durchgangsöffnung |
| 18 | Innenraumbereich |
| 20 | Druckübertragungsbereich |
| 22 | Richtung |
| 24 | Längserstreckungsrichtung |
| 26 | Kanal |
| 28 | Kanal |
| 30 | Stromregelventil |
| 32 | Gehäuse |
| 34 | Bereich |
| 36 | Bereich |
| 40 | Scheibe |
| 42 | Endbereich |

## Patentansprüche

1. Stromregelventil mit wenigstens einer Einlasseinheit (9), welche zu einem Einströmen einer Flüssigkeit in das Stromregelventil vorgesehen ist, und mit zumindest einer Auslasseinheit (10), welche zu einem Ausströmen der Flüssigkeit aus dem Stromregelventil vorgesehen ist, **dadurch gekennzeichnet, dass**
die Einlasseinheit (9) zumindest teilweise an einer radialen Außenoberfläche (14) des Stromregelventils angeordnet ist.

2. Stromregelventil nach Anspruch 1, wobei die Einlasseinheit (9) wenigstens eine Durchgangsöffnung (16) aufweist, welche in radialer Richtung von einer Außenseite des Stromregelventils zu einem Innenraumbereich (18) des Stromregelventils verläuft.

3. Stromregelventil nach einem der Ansprüche 1 oder 2, wobei das Stromregelventil wenigstens einen Kanal (5) aufweist, welcher von der Einlasseinheit (9) zu einem Druckübertragungsbereich (20) eines Regelelements (6) des Stromregelventils verläuft, wobei der Druckübertragungsbereich (20) dazu vorgesehen ist, durch einen Druck einer in das Stromregelventil eingeströmten und durch den Kanal (5) geflossenen Flüssigkeit wenigstens ein Energiespeicherelement (7) des Stromregelventils zumindest teilweise aufzuladen.

4. Stromregelventil nach Anspruch 3, wobei der Kanal (5) wenigstens teilweise innerhalb einer Wand eines Hülsenelements (4) des Stromregelventils verläuft.

5. Stromregelventil nach einem der vorherigen Ansprüche, wobei das Stromregelventil wenigstens ein Einstellelement (3) aufweist, welches zu einer Veränderung einer Druckdifferenz vorgesehen ist, welche bei einem Betriebsvorgang zwischen der Flüssigkeit an der Einlasseinheit (9) und der Flüssigkeit an der Auslasseinheit (10) herrscht.

6. Stromregelventil nach Anspruch 5, wobei die Auslasseinheit (10) weiter von dem Einstellelement (3) entfernt ist als die Einlasseinheit (9).

7. Stromregelventil nach einem der Ansprüche 5 oder 6, wobei das Einstellelement (3) wenigstens zwei Steuerkonturen (11, 12) aufweist, welche in Abhängigkeit von der Anordnung des Einstellelements (3) relativ zu der Einlasseinheit (9) bezüglich einer axialen Richtung (22) des Stromregelventils die Druckdifferenz bestimmen.

8. Stromregelventil nach einem der Ansprüche 5 bis 7, wobei das Stromregelventil eine Betätigungseinheit (2) aufweist, welche manuell entlang der Längserstreckungsrichtung (24) des Stromregelventils verschiebbar ist und welche bei einer derartigen Verschiebung das Einstellelement (3) betätigt.

9. Vorrichtung mit einem Stromregelventil nach einem der Ansprüche 1 bis 8, wobei die Vorrichtung einen außerhalb des Stromregelventils verlaufenden Kanal (26) aufweist, welcher in einer radialen Richtung zu wenigstens einer Einlassöffnung (16) der Einlasseinheit (9) verläuft.

10. Strömverfahren, insbesondere mit einem Stromregelventil nach einem der Ansprüche 1 bis 8, bei welchem durch eine Einlasseinheit (9) eines Stromregelventils eine Flüssigkeit einströmt und die Flüssigkeit durch eine Auslasseinheit (10) des Stromregelventil ausfließt, **dadurch gekennzeichnet, dass** die Einlasseinheit (9) zumindest teilweise an einer radialen Außenoberfläche (14) des Stromregelventils angeordnet ist.
